# EUROPEAN PATENT APPLICATION

(11) **EP 4 742 128 A1**
(43) Date of publication of application: **13.05.2026**
(21) Application number: 24895961.1
(22) Date of filing: 26.09.2024
(51) Int. Cl.: G06Q 10/1093

(54) **SCHEDULE GENERATION METHOD, ELECTRONIC DEVICE AND STORAGE MEDIUM**

(30) Priority: 30.11.2023 CN 202311630510
(71) Applicant: Huawei Technologies Co., Ltd., Shenzhen, Guangdong 518129 (CN)
(72) Inventor: REN, Jie, Shenzhen, Guangdong 518129 (CN); MAO, Feng, Shenzhen, Guangdong 518129 (CN); ZENG, Yiliang, Shenzhen, Guangdong 518129 (CN); WU, Tianyi, Shenzhen, Guangdong 518129 (CN); ZHU, Yanming, Shenzhen, Guangdong 518129 (CN); KANG, Yu, Shenzhen, Guangdong 518129 (CN)
(74) Representative: Goddar, Heinz J.
(86) International application number: PCT/CN2024/121299
(87) International publication number: WO 2025/112865

(57) **Abstract**

This application provides a schedule generation method, an electronic device, and a storage medium. The method includes: obtaining an input text; processing the input text based on user information of a first user to obtain a target task set, where the first user is a user who uses a first device, and the target task set includes one or more target tasks corresponding to the first user; and generating a corresponding schedule based on the target task set, to help adapt to various complex scenarios and improve user experience.

## Description

This application claims priority to Chinese Patent Application No. 202311630510.2, filed with the China National Intellectual Property Administration on November 30, 2023 and entitled "SCHEDULE GENERATION METHOD, ELECTRONIC DEVICE, AND STORAGE MEDIUM", which is incorporated herein by reference in its entirety.

### TECHNICAL FIELD

This application relates to the field of information technologies, and in particular, to a schedule generation method, an electronic device, and a storage medium.

### BACKGROUND

As the technology in electronic devices such as mobile phones advances, their functionality becomes increasingly powerful. A schedule reminder is an important function. For example, a user may generate a schedule in an electronic device. The schedule may include a task preset by the user. When the schedule is due, the electronic device may remind the user, so that the user executes the corresponding task in the schedule.

However, currently, schedule generation and reminder are basic and cannot adapt to complex scenarios, leading to poor user experience.

### SUMMARY

This application provides a schedule generation method, a schedule reminder method, an electronic device, and a storage medium, to help adapt to various complex scenarios and improve user experience.

According to a first aspect, this application provides a schedule generation method, applied to a first device, and including: obtaining an input text; processing the input text based on user information of a first user to obtain a target task set, where the first user is a user who uses the first device, and the target task set includes one or more target tasks corresponding to the first user; and generating a corresponding schedule based on the target task set.

In this application, a schedule corresponding to a user is generated based on different user information, that is, a schedule may be adaptively generated based on a different user. This can improve a matching degree between a schedule and a user and can improve user experience.

In a possible implementation, processing the input text based on the user information of the first user to obtain the target task set includes: decomposing the input text to obtain an initial task set, where the initial task set includes one or more initial tasks; and performing information supplementation and/or screening on the initial task set based on the user information of the first user, to obtain the target task set.

In this application, during generation of a schedule, information supplementation is performed on a task included in the schedule, so that a task being incomplete due to missing information can be avoided and/or a task irrelevant to a user can be screened out from tasks included in the schedule. This improves task execution efficiency and improves user experience.

In a possible implementation, performing information supplementation and/or screening on the initial task set based on the user information of the first user includes: performing, based on information found in the user information of the first user and/or information obtained through reasoning that is based on the user information of the first user, information supplementation on an initial task with missing information in the initial task set.

In a possible implementation, performing information supplementation and/or screening on the initial task set based on the user information of the first user includes: screening out a completed task and/or a task unrelated to the first user from the initial task set.

In a possible implementation, the target task set includes a plurality of target tasks, the schedule generated based on the target task set is a chain schedule, a plurality of schedules in the chain schedule are generated based on the plurality of target tasks in the target task set, the plurality of schedules in the chain schedule are arranged in chronological order of execution, and the plurality of schedules in the chain schedule are associated with each other.

In this application, during generation of a schedule, a plurality of generated schedules are associated with each other and formed into a chain schedule, so that schedule creation efficiency can be improved, and a schedule that needs to be created by a user is not missed.

In a possible implementation, before processing the input text based on the user information of the first user, the method further includes: determining whether the input text includes an intention of generating a schedule; and if the input text includes an intention of generating a schedule, processing the input text based on the user information of the first user.

In this application, the intention of the input text is determined, so that invalid processing on the input text can be avoided, thereby improving schedule generation efficiency.

In a possible implementation, the user information of the first user includes personal information of the first user and/or social relationship information of the first user.

In a possible implementation, the personal information of the first user includes at least address location information of the first user, historical behavior information of the first user, and/or historical schedule information of the first user.

In a possible implementation, content in the input text is from at least one of an email, social software, or an instant message.

In a possible implementation, after generating the corresponding schedule based on the target task set, the method further includes: displaying a reminder interface in response to arrival of a reminder time of a first schedule, where the reminder interface is used to remind the user to execute a target task corresponding to a due schedule, the reminder interface includes information indicating a recommendation service of the due first schedule, the information about the recommendation service of the due first schedule includes a target application, and the target application is an application for executing the target task corresponding to the due first schedule; and jumping to a target page in response to an operation of starting, by the user, the target application on the reminder interface, where the target page is a page displayed when the user completes the target task corresponding to the due first schedule.

In this application, the recommendation service on the reminder interface is directly displayed on the target page, to complete the task corresponding to the due schedule. This can improve task completion efficiency and improve user experience.

In a possible implementation, after jumping to the target page, the method further includes: automatically inputting, on the target page, target information corresponding to the recommendation service of the due first schedule, where the target information is task information that needs to be input to complete, on the target page, the target task corresponding to the due first schedule.

In a possible implementation, before automatically inputting, on the target page, the target information corresponding to the recommendation service of the due first schedule, the method further includes: determining whether there is information missing in the target information corresponding to the recommendation service of the due first schedule; and if determining that there is information missing in the target information corresponding to the recommendation service of the due first schedule, performing information supplementation on the target information corresponding to the recommendation service of the due first schedule.

In this application, information supplementation is performed on the recommendation service, so that a case in which the recommendation service cannot be executed due to lack of information about the recommendation service can be effectively avoided.

In a possible implementation, performing information supplementation on the target information corresponding to the recommendation service of the due first schedule includes: if the due first schedule is a schedule in the chain schedule, performing, based on information about another schedule other than the due first schedule in the chain schedule, information supplementation on the target information corresponding to the recommendation service of the due first schedule, where the plurality of schedules in the chain schedule are generated based on the plurality of target tasks, the plurality of schedules in the chain schedule are arranged in chronological order of execution, and the plurality of schedules in the chain schedule are associated with each other.

In this application, because the plurality of schedules in the chain schedule are associated with each other, information supplementation is performed on a recommendation service of a schedule with missing information by using another schedule in the chain schedule, so that efficiency and accuracy of information supplementation can be improved.

In a possible implementation, after generating the corresponding schedule based on the target task set, the method further includes: obtaining a first target schedule; and sending, by the first device, reminder information in response to a distance between a current location of the first user and a target location indicated by the first target schedule being less than or equal to a preset threshold, where the reminder information is used to remind the user to complete a task corresponding to the first target schedule.

In this application, a reminder is generated based on a distance between the current location of the user and a task location, so that diversity and flexibility of the reminder can be improved, and user requirements in different scenarios can be met.

In a possible implementation, after the first device sends the reminder information, the method further includes: sending a schedule cancellation indication to a third device in response to a received task completion notification, where the task indicated by the first target schedule and a task indicated by a second target schedule are a same task, the second target schedule is a schedule in the third device, the task completion notification is used to notify that the task indicated by the first target schedule is completed, and the schedule cancellation indication indicates the third device to cancel the second target schedule.

In this application, in a scenario in which a plurality of users share a schedule, after completing a task, any user notifies another user of canceling a related schedule, so that an invalid task is not executed. This can improve task execution efficiency and improve user experience.

According to a second aspect, this application provides a schedule generation method, including: obtaining an input text; processing the input text to obtain a target task set, where the target task set includes a plurality of target tasks; and generating a chain schedule based on the target task set, where a plurality of schedules in the chain schedule are arranged in chronological order of execution, and the plurality of schedules in the chain schedule are associated with each other.

According to a third aspect, this application provides a schedule reminder method, including: displaying a reminder interface in response to arrival of a reminder time of a first schedule, where the reminder interface is used to remind a user to execute a target task corresponding to a due schedule, the reminder interface includes information indicating a recommendation service of the due first schedule, the information about the recommendation service of the due first schedule includes a target application, and the target application is an application for executing the target task corresponding to the due first schedule; and jumping to a target page in response to an operation of starting, by the user, the target application on the reminder interface, where the target page is a page displayed when the user completes the target task corresponding to the due first schedule.

In a possible implementation, after jumping to the target page, the method further includes: automatically inputting, on the target page, target information corresponding to the recommendation service of the due first schedule, where the target information is task information that needs to be input to complete, on the target page, the target task corresponding to the due first schedule.

In a possible implementation, before automatically inputting, on the target page, the target information corresponding to the recommendation service of the due first schedule, the method further includes: determining whether there is information missing in the target information corresponding to the recommendation service of the due first schedule; and if determining that there is information missing in the target information corresponding to the recommendation service of the due first schedule, performing information supplementation on the target information corresponding to the recommendation service of the due first schedule.

In a possible implementation, performing information supplementation on the target information corresponding to the recommendation service of the due first schedule includes: if the due first schedule is a schedule in the chain schedule, performing, based on information about another schedule other than the due first schedule in the chain schedule, information supplementation on the target information corresponding to the recommendation service of the due first schedule, where the plurality of schedules in the chain schedule are generated based on the plurality of target tasks, the plurality of schedules in the chain schedule are arranged in chronological order of execution, and the plurality of schedules in the chain schedule are associated with each other.

According to a fourth aspect, this application provides a schedule reminder method, applied to a first device, and including: obtaining a first target schedule; and sending, by the first device, reminder information in response to a distance between a current location of a first user and a target location indicated by the first target schedule being less than or equal to a preset threshold, where the reminder information is used to remind the user to complete a task corresponding to the first target schedule.

In a possible implementation, after the first device sends the reminder information, the method further includes: sending a schedule cancellation indication to a third device in response to a received task completion notification, where the task indicated by the first target schedule and a task indicated by a second target schedule are a same task, the second target schedule is a schedule in the third device, the task completion notification is used to notify that the task indicated by the first target schedule is completed, and the schedule cancellation indication indicates the third device to cancel the second target schedule.

According to a fifth aspect, this application provides a schedule generation apparatus, including one or more functional modules, where the one or more functional modules are configured to implement the schedule generation method according to the first aspect.

According to a sixth aspect, this application provides a schedule generation apparatus, including one or more functional modules, where the one or more functional modules are configured to implement the schedule generation method according to the second aspect.

According to a seventh aspect, this application provides a schedule reminder apparatus, including one or more functional modules, where the one or more functional modules are configured to implement the schedule reminder method according to the third aspect.

According to an eighth aspect, this application provides a schedule reminder apparatus, including one or more functional modules, where the one or more functional modules are configured to implement the schedule reminder method according to the fourth aspect.

According to a ninth aspect, this application provides an electronic device, including a processor and a memory, where the memory is configured to store a program; and the processor is configured to run the program to implement the schedule generation method according to the first aspect and the second aspect, or implement the schedule reminder method according to the third aspect and the fourth aspect.

According to a tenth aspect, this application provides a readable storage medium, where the readable storage medium stores a program, and when the program is run on an electronic device, the electronic device is caused to implement the schedule generation method according to the first aspect and the second aspect, or implement the schedule reminder method according to the third aspect and the fourth aspect.

According to an eleventh aspect, this application provides a program, where when the program is run on a processor of a slave electronic device, the electronic device is caused to perform the schedule generation method according to the first aspect and the second aspect, or implement the schedule reminder method according to the third aspect and the fourth aspect.

In a possible design, the program in the eleventh aspect may be all or partially stored on a storage medium packaged with a processor, or may be all or partially stored on a memory not packaged with the processor.

### BRIEF DESCRIPTION OF DRAWINGS

FIG. 1 is a diagram of a structure of an electronic device according to an embodiment of this application;
FIG. 2 is a diagram of a system architecture according to an embodiment of this application;
FIG. 3 is a schematic flowchart of an embodiment of a schedule generation method according to this application;
FIG. 4A and FIG. 4B are diagrams of a text copying manner according to an embodiment of this application;
FIG. 5 is a diagram of triggering generation of a schedule according to an embodiment of this application;
FIG. 6A and FIG. 6B are diagrams of task information according to an embodiment of this application;
FIG. 7 is a diagram of an embodiment of adding a schedule according to this application;
FIG. 8 is a diagram of another embodiment of adding a schedule according to this application;
FIG. 9 is a schematic flowchart of an embodiment of a schedule reminder method according to this application;
FIG. 10 is a diagram of service recommendation according to an embodiment of this application;
FIG. 11 is a diagram of a target page according to an embodiment of this application;
FIG. 12 is a schematic flowchart of another embodiment of a schedule reminder method according to this application;
FIG. 13 is a diagram of a structure of an embodiment of a schedule generation apparatus according to this application; and
FIG. 14 is a diagram of a structure of another embodiment of a schedule generation apparatus according to this application.

### DESCRIPTION OF EMBODIMENTS

In embodiments of this application, unless otherwise specified, the character "/" indicates an "or" relationship between associated objects. For example, A/B may indicate A or B. "And/or" describes an association relationship between the associated objects, and indicates that three relationships may exist. For example, A and/or B may represent the following three cases: Only A exists, both A and B exist, and only B exists.

It should be noted that, in embodiments of this application, terms such as "first" and "second" are merely intended for distinguishing and description, and should not be understood as indicating or implying relative importance or implicitly indicating a quantity of indicated technical features, or should not be understood as indicating or implying a sequence.

In embodiments of this application, "at least one" means one or more, and "a plurality of" means two or more. In addition, "at least one of the following items (pieces)" or a similar expression thereof means any combination of these items and may include a single item (piece) or any combination of a plurality of items (pieces). For example, at least one item (piece) of A, B, or C may indicate A, B, C, A and B, A and C, B and C, or A, B, and C. A, B, and C each may be an element, or may be a set that includes one or more elements.

In embodiments of this application, "example", "in some embodiments", "in another embodiment", or the like indicates giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, terms "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that, when "equal to" is used together with "greater than", "equal to" cannot be used together with "less than"; and when "equal to" is used together with "less than", "equal to" cannot be used together with "greater than".

As the technology in electronic devices such as mobile phones advances, their functionality becomes increasingly powerful. A schedule reminder is an important function. For example, a user may generate a schedule in an electronic device. The schedule may include a task preset by the user. When the schedule is due, the electronic device may remind the user, so that the user executes the corresponding task in the schedule.

However, currently, schedule generation is basic, relying only on time and a task, and cannot adapt to complex scenarios, leading to poor user experience.

Based on the foregoing problems, an embodiment of this application provides a schedule generation method, applied to an electronic device. The electronic device may be a mobile terminal. The mobile terminal may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a station (STATION, ST) in a WLAN; or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a compute device or another processing device connected to a wireless modem, a vehicle-mounted device, an internet of vehicles terminal, a computer, a laptop computer, a handheld communication device, a handheld compute device, a satellite radio device, a wireless modem card, a television set top box (set top box, STB), customer premise equipment (customer premise equipment, CPE), and/or another device configured to perform communication in a wireless system, or a mobile terminal in a next-generation communication system like a 5G network, or a mobile terminal in a future evolved public land mobile network (Public Land Mobile Network, PLMN), or the like.

In some optional embodiments, the electronic device may alternatively be a wearable device. The wearable device may also be referred to as an intelligent wearable device, and is a general term of wearable devices that are intelligently designed and developed for daily wear by using a wearable technology, for example, a smart watch and a smart band.

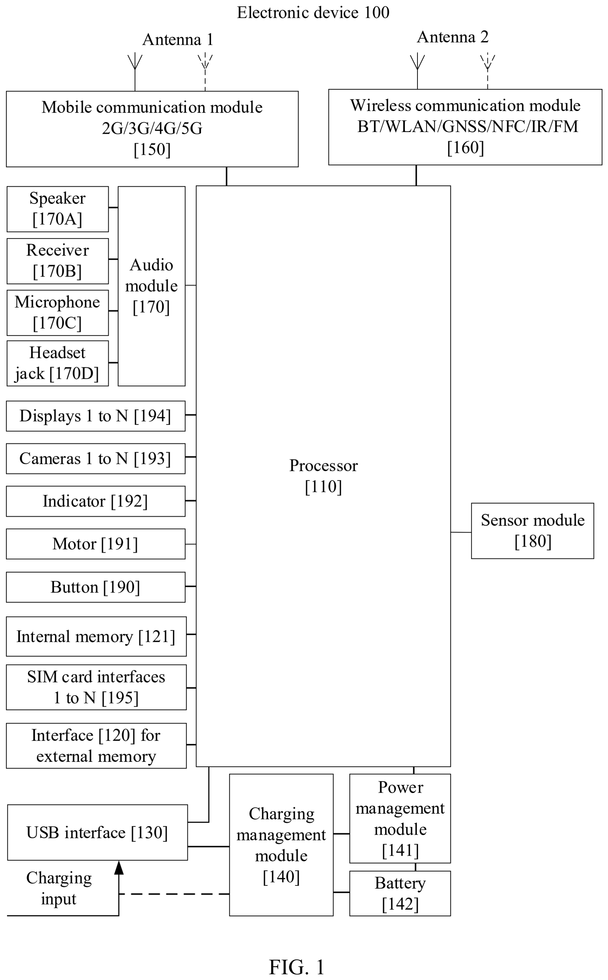

FIG. 1 is a diagram of an example of a structure of an electronic device 100.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, and a display 194.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive a charging input from a charger. The charger may be a wireless charger or a wired charger. In some embodiments in which the charger is a wired charger, the charging management module 140 may receive a charging input from the wired charger through the USB interface 130. In some embodiments in which the charger is a wireless charger, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be used to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The NPU is a neural-network (neural-network, NN) computing processor. The NPU quickly processes input information with reference to a structure of a biological neural network, for example, a transmission mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to expand a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

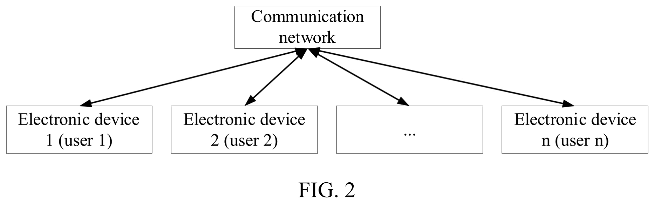

FIG. 2 is a diagram of a network architecture according to an embodiment of this application. As shown in FIG. 2, the network architecture may include a plurality of electronic devices. For example, the plurality of electronic devices may be an electronic device 1, an electronic device 2, ..., and an electronic device n, where n is a positive integer, and the plurality of electronic devices may be the foregoing electronic device 100.

It may be understood that the plurality of electronic devices may communicate with each other through a mobile communication network, or the plurality of electronic devices may communicate with each other through a mobile internet, or the plurality of electronic devices may communicate with each other through a local network like wireless fidelity (Wireless Fidelity, Wi-Fi), or the plurality of electronic devices may communicate with each other through a network in another form. A manner of communication between the plurality of electronic devices is not specially limited in embodiments of this application.

It should be noted that for a same input text, different schedules may be generated from a perspective of different users, that is, different users may correspond to different schedules. However, a current schedule generation method does not distinguish between users for the same input text, that is, the same input text generates identical schedules for the different users, and these schedules include only information such as time and a task. According to the schedule generation methods provided in embodiments of this application, for the same input text, a corresponding schedule may be generated depending on a user who uses a current electronic device. Therefore, adaptive schedule generation can be implemented, and use requirements of a plurality of users are met.

For example, it is assumed that there are three users. The three users are a user 1, a user 2, and a user 3 respectively. The user 1 uses the electronic device 1, the user 2 uses the electronic device 2, and the user 3 uses the electronic device 3. It is assumed that the electronic device 1, the electronic device 2, and the electronic device 3 simultaneously obtain a same input text. For ease of description, the same input text is referred to as an input text 1 for short. In this case, the electronic device 1 may generate a schedule 1 for the user 1, the electronic device 2 may generate a schedule 2 for the user 2, and the electronic device 3 may generate a schedule 3 for the user 3. The schedule 1, the schedule 2, and the schedule 3 are different.

The input text may be content in social software. For example, the input text may be a chat record of a plurality of users, or the input text may be an instant message like a push message, a notification message, or an SMS message, or the input text may be content of an email. A type of the input text is not specially limited in embodiments of this application.

In some optional embodiments, for a plurality of schedules generated for any user, the plurality of generated schedules may be a chain schedule. The chain schedule may be schedules arranged in chronological order, or the chain schedule may be schedules arranged in order of execution of tasks. The schedules may be associated with each other. This is not specifically limited in embodiments of this application. Compared with the conventional technology in which only a single schedule can be created, this embodiment of this application can greatly improve schedule creation efficiency, and prevent a user from missing a schedule that needs to be created.

For example, the user 1 is used as an example. It is assumed that an intention identified from the input text 1 is to go to the movies. In this case, the input text 1 may include two chain tasks of buying a movie ticket and going to the movies, so that schedules corresponding to the two chain tasks of buying a movie ticket and going to the movies can be generated, and buying a movie ticket needs to be executed before going to the movies.

In some optional embodiments, to improve task execution efficiency and improve user experience, when a schedule is created, a service recommendation may be associated with a task corresponding to the schedule, so that the user can use the recommended service to execute the corresponding task during schedule reminder. Compared with the conventional technology in which a schedule reminder is merely a simple reminder, the service recommendation in this embodiment of this application can greatly improve efficiency of executing a task by the user.

The recommended service may be a system application, or the recommended service may be a third-party application. A type of the recommended service is not specially limited in embodiments of this application.

For example, a task of buying a movie ticket is used as an example. After a schedule for buying a movie ticket is generated, the task of buying a movie ticket may be associated with a ticketing application, so that during a schedule reminder, the user may tap to enter the ticketing application for buying a ticket, without searching for a related ticketing application, thereby improving task execution efficiency.

In some optional embodiments, to further improve task execution efficiency, when entering the recommended service, the user may directly enter a page associated with a currently executed task, without entering a home page of the recommended service, thereby improving efficiency.

For example, the task of buying a movie ticket is still used as an example. After tapping the associated ticketing application, the user may directly enter a ticket buying page without entering a home page of the ticketing application, so that complex operations of the user can be avoided.

In some optional embodiments, for a same schedule, different users may generate different reminders based on different trigger conditions. This can meet a requirement for a plurality of users to be reminded of the same schedule. The trigger condition may be a distance, or the trigger condition may be another condition. This is not specifically limited in embodiments of this application.

For example, it is assumed that the user 1, the user 2, and the user 3 share a same schedule, and the schedule may correspond to a task of picking up a package from a destination. In this case, when any one of the user 1, the user 2, and the user 3 approaches the destination, a corresponding schedule reminder may be generated, to complete the task of picking up a package.

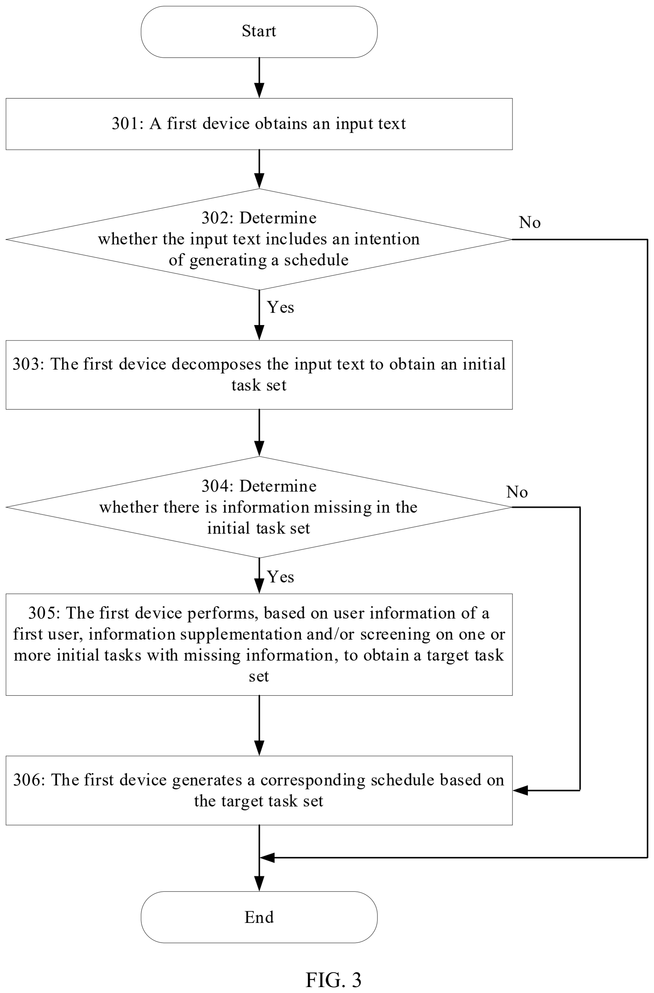

Then, with reference to FIG. 3, FIG. 4A, FIG. 4B, FIG. 5, FIG. 6A, FIG. 6B, and FIG. 7 to FIG. 10, a schedule generation method provided in an embodiment of this application is described.

FIG. 3 is a schematic flowchart of an embodiment of a schedule generation method according to this application. The method specifically includes the following steps.

Step 301: A first device obtains an input text.

Specifically, the first device may be any one of a plurality of electronic devices.

As described above, the input text may be chat content between a plurality of users, or the input text may be meeting minutes, or the input text may be content of an email, or the input text may be content of an instant message, or the input text may be content of another type. A type of the input text is not specially limited in this application.

For example, the input text is chat content. The plurality of users may have a conversation in a chat box, and any user may copy content in the chat box as the input text.

In some optional embodiments, a manner in which the user selects the content in the chat box as the input text may be: The user may select all content displayed on a current interface as the input text. For example, the user may copy all dialog content on the current display interface, to obtain the input text.

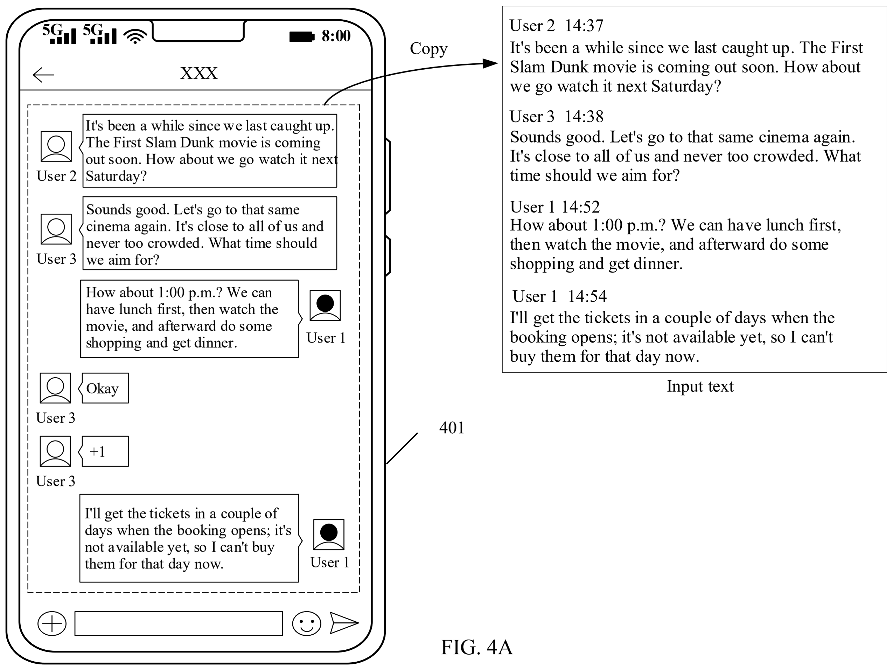

FIG. 4A is used as an example for description. With reference to FIG. 4A, an interface 401 is a chat dialog box between a plurality of users. For example, the plurality of users are a user 1, a user 2, and a user 3. A total of five chat records are included on the current interface, where there are two chat records corresponding to the user 1, one chat record corresponding to the user 2, and two chat records corresponding to the user 3. The user may copy all content on the interface 401 (for example, the five chat records on the current interface) as the input text.

In some optional embodiments, a manner in which the user selects the content in the chat box as the input text may alternatively be: The user may select and copy a part of content displayed on a current interface as the input text. For example, the user may select and copy several records in a chat dialog box as the input text, so that some noise information can be screened out, thereby improving text recognition efficiency.

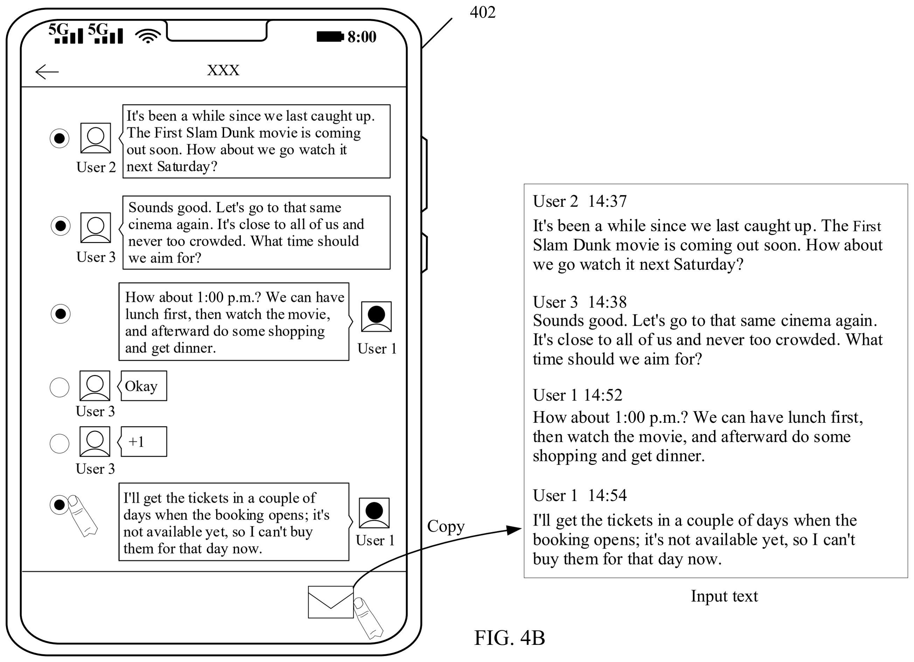

FIG. 4B is used as an example for description. With reference to FIG. 4B, an interface 402 is a chat dialog box between a plurality of users. An example in which the plurality of users are a user 1, a user 2, and a user 3 is still used. A total of five chat records are included on the current interface, where there are two chat records corresponding to the user 1, one chat record corresponding to the user 2, and two chat records corresponding to the user 3. Then, the user may select a chat record by tapping a control corresponding to the chat record, and may copy the selected chat record. For example, the user may select and copy the two chat records of the user 1, the one chat record of the user 2, and one chat record of the user 3 as the input text. It may be understood that the selected chat content and the selection manner in the foregoing embodiment are merely examples for description, and do not constitute a limitation on embodiments of this application. In some embodiments, the user may select content as required, or may select the chat content in another manner other than a control.

In some optional embodiments, a manner in which the user selects the content in the chat box as the input text may alternatively be: The user may select all or a part of content on a plurality of interfaces as the input text. For example, chat records of a plurality of users may be related to the plurality of interfaces, and the user may scroll through the interfaces to select the all or part of the content on the plurality of interfaces as the input text.

Step 302: The first device determines whether the input text includes an intention of generating a schedule.

Specifically, after obtaining the input text, the first device may determine whether the input text includes the intention of generating a schedule.

Whether the input text includes the intention of generating a schedule may be determined by using an existing identification model. For example, the identification model may be a binary classification model. The binary classification model may be obtained in advance through training. This application imposes no special limitation on the identification model.

If the first device determines that the input text includes the intention of generating a schedule, step 303 may be performed.

Alternatively, if the first device determines that the input text does not include the intention of generating a schedule, the current procedure ends.

In some optional embodiments, after determining that the input text includes the intention of generating a schedule, the first device may further display a corresponding control or menu on the current interface, so that the user selects whether to generate a schedule in the first device.

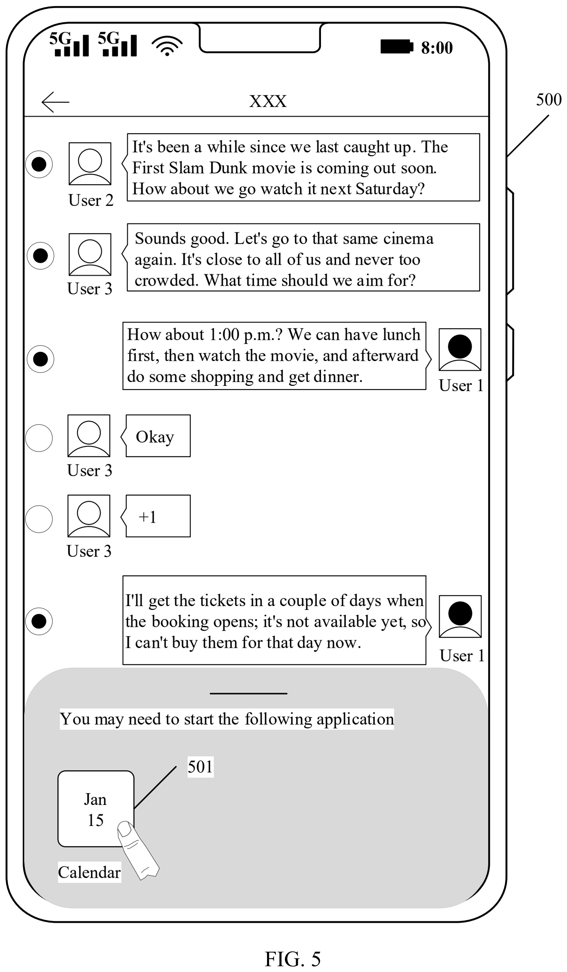

For example, FIG. 4B is used as an example. After determining that the input text includes the intention of generating a schedule, the first device may display, on the current interface, an icon of an application for generating a schedule. For example, it is assumed that the application for generating a schedule may be a calendar application. In this case, an icon of the calendar application may be displayed, so that an interface 500 shown in FIG. 5 may be obtained. The user may tap an icon 501 on the interface 500 shown in FIG. 5, to enter the calendar application, so that a corresponding schedule is generated in the calendar application.

In some optional embodiments, a system application, a third-party application, or another interaction manner may further prompt the user whether jumping to a page of the application for generating a schedule is needed. This is not specifically limited in embodiments of this application.

Step 303: The first device decomposes the input text to obtain an initial task set.

Specifically, a first user is a user who uses the first device, and the initial task set may include one or more initial tasks.

In some optional embodiments, after determining that the input text includes the intention of generating a schedule, the first device may perform task decomposition on the input text to obtain the one or more initial tasks. Each initial task may include but is not limited to one or more of a time, a place, a person, or an event.

In some optional embodiments, the plurality of initial tasks obtained through task decomposition may be tasks associated with each other, and the plurality of tasks associated with each other may be referred to as a chain task. For example, the chain task may be a plurality of tasks arranged in chronological order, and the chronological order may be determined based on chronological order of execution of the tasks. In the conventional technology, only one task is usually obtained by identifying an input text, and a corresponding schedule is generated based on the task. However, the input text may include a plurality of tasks. Because the tasks in the schedule are not decomposed in the conventional technology, more tasks cannot be identified, and therefore some tasks may be missing, leading to poor user experience.

In this application, task decomposition is performed based on association between tasks, to obtain a chain task, so that a plurality of tasks in the input text may be identified. It can be learned that, in this embodiment of this application, the chain task is obtained by performing task decomposition on the input text, so that the user can completely execute all tasks indicated in the input text, thereby effectively preventing the user from forgetting a task.

For example, it is assumed that a chat record includes information about going to the movies on a specific date. In the conventional technology, a schedule of going to the movies on a specific day may be generated based on the chat information. The schedule of going to the movies on a specific day may include two tasks. For example, the two tasks may be a task of buying a movie ticket and a task of watching a movie. Therefore, in this embodiment of this application, two schedules may be generated based on the chat information, in which one schedule is buying a movie ticket, and the other schedule is going to the movies on a specific day. It can be learned that, compared with this embodiment of this application, the conventional technology has the schedule of buying a movie ticket missed, possibly leading to missing of the task of buying a movie ticket. Consequently, the user may fail to watch a movie because the user forgets to buy a movie ticket.

Step 304: The first device determines whether there is information missing in the one or more initial tasks obtained through decomposition.

Specifically, after performing task decomposition on the input text, the first device may determine whether there is information missing in the one or more initial tasks obtained through decomposition.

A manner of determining whether there is information missing in the one or more initial tasks obtained through decomposition may be determining whether an information field in the initial task includes corresponding information.

It may be understood that an information field of a task may be preset. For example, the task may include information fields such as a time, a place, a person, and an event, but this does not constitute a limitation on embodiments of this application. In some embodiments, the task may include more or fewer information fields, and an information field may be selected based on a specific use scenario or an actual requirement.

After task decomposition is performed on the input text, content may be written into a corresponding information field, to determine whether there is information missing in the one or more initial tasks obtained through decomposition. If any information field corresponding to an initial task does not include corresponding content, there is information missing in the initial task corresponding to the information field; or if all information fields corresponding to an initial task include corresponding content, there is no information missing in the initial task corresponding to the information field.

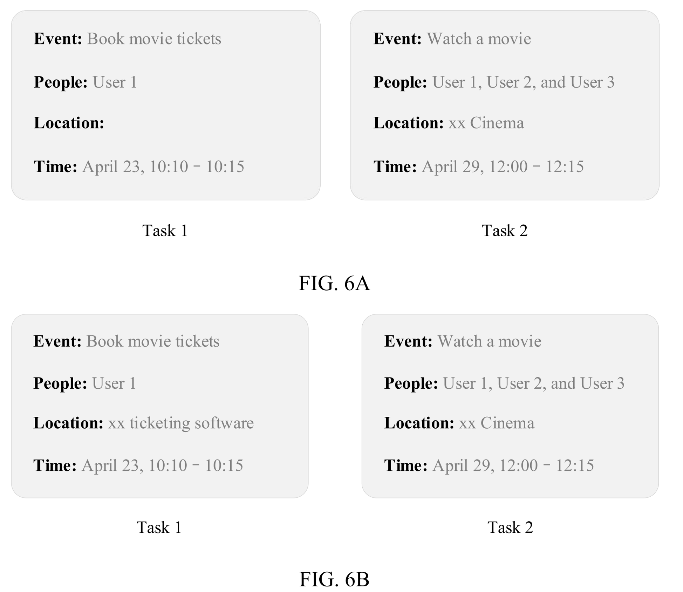

An example in which a preset information field includes information fields such as a time, a place, a person, and an event is used to describe an information field in a task with reference to FIG. 6A and FIG. 6B.

With reference to FIG. 6A, an initial task 1 and an initial task 2 may be obtained by performing task decomposition on the input text. The initial task 1 and the initial task 2 each include fields such as a time, a place, a person, and an event. Information fields such as the time, the person, and the event in the initial task 1 all include corresponding content, but the location information field in the initial task 1 lacks corresponding content. Information fields such as the time, the place, the person, and the event in the initial task 2 all include corresponding content. Because the location information field in the initial task 1 lacks the corresponding content, and all information fields in the initial task 2 include the corresponding content, it may be determined that there is information missing in the initial task 1 and there is no information missing in the initial task 2.

With reference to FIG. 6B, an initial task 1 and an initial task 2 may be obtained by performing task decomposition on the input text. The initial task 1 and the initial task 2 each include fields such as a time, a place, a person, and an event, and the information field such as the time, the place, the person, and the event in each of the initial task 1 and the initial task 2 includes corresponding content. Therefore, there is no information missing in the initial task 1 and the initial task 2.

If the first device determines that there is information missing in the one or more initial tasks obtained through decomposition, step 305 may be performed.

If the first device determines that there is no information missing in the one or more initial tasks obtained through decomposition, the initial task set may be considered as a target task set, and step 306 may be performed.

Step 305: The first device performs, based on user information of the first user, information supplementation and/or screening on the one or more initial tasks with the missing information, to obtain the target task set.

Specifically, the target task set may include one or more target tasks corresponding to the first user. The one or more target tasks may be obtained by performing information supplementation and/or screening on the one or more initial tasks with the missing information.

For example, the network architecture shown in FIG. 2 is used as an example. For a user 1 who uses an electronic device 1, the first user is the user 1 and the first device is the electronic device 1, that is, a target task corresponding to the user 1 may be generated in the electronic device 1. Alternatively, for a user 2 who uses an electronic device 2, the first user is the user 2 and the first device is the electronic device 2, that is, a target task corresponding to the user 2 may be generated in the electronic device 2. Alternatively, for a user n who uses an electronic device n, the first user is the user n and the first device is the electronic device n, that is, a target task corresponding to the user n may be generated in the electronic device n.

In some optional embodiments, after determining that there is information missing in the one or more initial tasks obtained through decomposition, the first device may perform, based on the user information of the first user, information supplementation on the initial tasks with the missing information. There may be one or more initial tasks with the missing information. The user information of the first user may include personal information of the first user and/or social relationship information of the first user. The personal information of the first user may include but is not limited to information such as a geographical location of the first user, historical behavior of the first user, and a historical schedule of the first user. The social relationship information of the first user may include but is not limited to information such as a classmate relationship, a colleague relationship, a family relationship, and a friend relationship.

In some optional embodiments, the user information of the first user may come from a user personal knowledge base. The user personal knowledge base may be described in a form of a knowledge graph, or the user personal knowledge base may be described in another form. This is not specifically limited in embodiments of this application.

It may be understood that the user information of the first user may also be represented in a form other than the user personal knowledge base, for example, in a form of a document, a table, or a chart. This is not specifically limited in embodiments of this application.

It may be understood that a reason for information loss is usually oral chat content between users or an excessively concise language. Therefore, with the assistance of the user personal knowledge base, information about the chat content may be supplemented, so that content corresponding to an information field in the initial task may be further supplemented.

In some optional embodiments, for a non-customary reference, information supplementation may be performed by querying the user personal knowledge base. The non-customary reference may also be referred to as a specific reference, and content referred to by the non-customary reference is specific.

For example, it is assumed that the chat content includes "Xiao A's birthday". Because "Xiao A's birthday" does not include an exact time, there is information missing. However, "Xiao A's birthday" has a precise time. Therefore, a birthday corresponding to Xiao A can be found conveniently and quickly by searching the user personal knowledge base, so that information supplementation can be completed.

For another example, it is assumed that the chat content includes "the cinema visited last time". Because "the cinema visited last time" does not include an exact location, there is information missing. However, if "the cinema visited last time" has an exact location, a name and a location of the cinema visited last time can be found conveniently and quickly by searching the user personal knowledge base, so that information supplementation can be completed.

For another example, it is assumed that the chat content includes "Wang's daughter". Because "Wang's daughter" does not include an exact character, there is information missing. However, if "Wang's daughter" has an exact name, the exact name of Wang's daughter can be found conveniently and quickly by searching the user personal knowledge base, so that information supplementation can be completed.

In some optional embodiments, for a customary reference, information supplementation may be performed through knowledge reasoning on content in the user personal knowledge base. The customary reference may also be referred to as a non-specific reference, and content referred to by the customary reference is non-specific.

For example, it is assumed that the chat content includes "the hot pot restaurant that three of us often go to". Because "the hot pot restaurant that three of us often go to" does not include an exact location, there is information missing. In addition, because "the hot pot restaurant that three of us often go to" do not include specific reference content, the required content cannot be obtained through query. Therefore, statistics on the hot pot restaurant that the three people most frequently go to may be collected through knowledge reasoning on the user personal knowledge base, to deduce an exact name and location of the hot pot restaurant that the three people most frequently go to, so that information supplementation can be completed.

In some optional embodiments, after obtaining the initial task set, the first device may further screen one or more initial tasks in the initial task set, to screen out a task completed by the first user and/or a task unrelated to the first user.

For example, it is assumed that four initial tasks are obtained through task decomposition. The four initial tasks are an initial task 1, an initial task 2, an initial task 3, and an initial task 4. The task 1 is a concert ticket buying task, the task 2 is a train ticket buying task, the task 3 is a hotel booking task, and the task 4 is a ride-hailing booking task. If the first user has booked a train ticket in advance, the task 2 is a completed task, and may be screened out.

For another example, it is assumed that a plurality of initial tasks are obtained through task decomposition. The plurality of initial tasks include a task of " buying a train ticket from a place A to a place B". It is assumed that the first user is in the place B. In this case, the task of " buying a train ticket from a place A to a place B" is a task unrelated to the first user, and may be screened out.

It may be understood that the first device may perform information supplementation on the initial task set separately, or the first device may perform screening on the initial task set separately, or the first device may perform information supplementation and screening on the initial task set simultaneously. This is not specially limited in embodiments of this application.

In some optional embodiments, during decomposition of the input text, the first device may decompose the input text based on the user information of the first user, and may perform information supplementation and/or screening during decomposition. Therefore, a redundant step of obtaining the initial task set through decomposition can be avoided, that is, the target task set can be obtained in one step, thereby improving efficiency of obtaining the target task.

Step 306: The first device generates a corresponding schedule based on the target task set.

Specifically, after the one or more target tasks in the target task set are determined, a corresponding schedule or corresponding schedules may be generated based on the one or more target tasks in the target task set. A correspondence between the schedule and the target task is one-to-one correspondence, that is, one target task corresponds to one schedule.

It may be understood that the schedule generated by the first device corresponds to the first user, that is, after the schedule is due, the first user may be reminded to execute the target task corresponding to the schedule.

For example, it is assumed that three target tasks are finally obtained. The three target tasks are a target task 1, a target task 2, and a target task 3. In this case, a schedule 1 corresponding to the target task 1, a schedule 2 corresponding to the target task 2, and a schedule 3 corresponding to the target task 3 may be generated.

In some optional embodiments, if the target task set includes a plurality of target tasks, and the plurality of target tasks are a chain task, a plurality of correspondingly generated schedules may be a chain schedule, where the plurality of schedules in the chain schedule are arranged in chronological order of execution, and the plurality of schedules in the chain schedule are associated with each other.

In some optional embodiments, after the corresponding schedule is generated based on the target task, the user may further perform selection on a plurality of generated to-be-selected schedules, to generate a schedule needed by the user.

For example, a plurality of to-be-selected schedules may be displayed in an application for displaying a schedule (for example, a calendar application). The user may determine a final schedule through selection on a display interface of the calendar application, and may display the final schedule in the application for displaying a schedule.

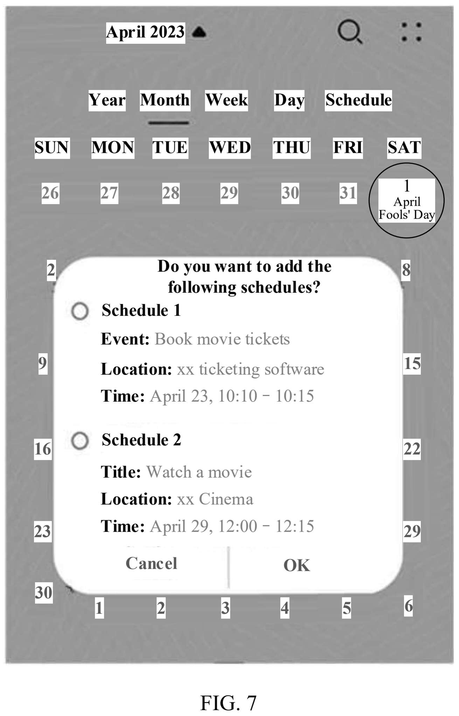

Exemplary descriptions are provided herein with reference to FIG. 7. With reference to FIG. 7, it is assumed that two to-be-selected schedules are generated based on a target task, and the two to-be-selected schedules are a schedule 1 and a schedule 2 respectively, and may be displayed on the display interface of the calendar application. The user may randomly select either one or both of the schedule 1 and the schedule 2 as the final schedule, and may display the final schedule in the calendar application.

For another example, a plurality of to-be-selected schedules may be displayed in a chat box. The user may determine a final schedule through selection on a display interface of the chat box, and may display the final schedule in an application for displaying a schedule (for example, a calendar application).

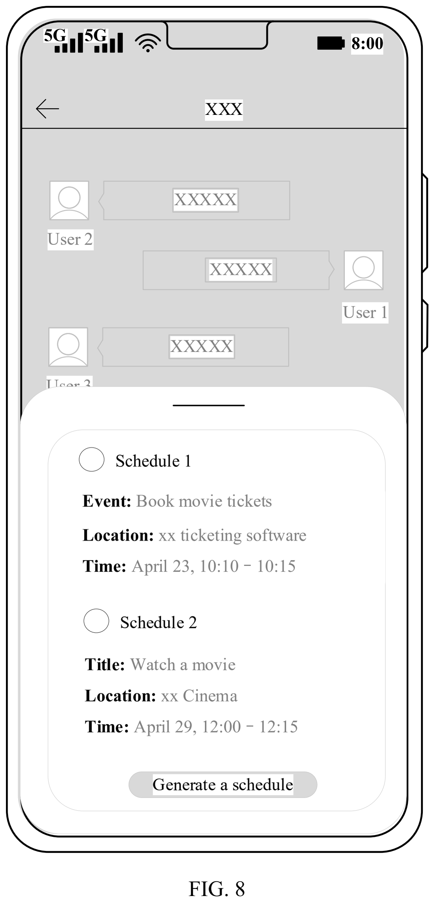

Exemplary descriptions are provided herein with reference to FIG. 8. With reference to FIG. 8, it is assumed that two to-be-selected schedules are generated based on a target task, and the two to-be-selected schedules are a schedule 1 and a schedule 2 respectively, and may be displayed on the interface of the chat box. The user may randomly select either one or both of the schedule 1 and the schedule 2 as the final schedule, and may display the final schedule in the calendar application.

In some optional embodiments, after the schedule is generated, target information may be further associated with a corresponding task in the schedule. The target information may be information required when a target application is used to execute a target task in the schedule. The target application may be an application included in a recommendation service. The target application may be used to complete the target task in the schedule. The recommendation service may be displayed on a reminder page after the schedule is due. For example, a schedule includes a ticket buying task. In this case, the schedule may be associated with ticket buying information. The ticket buying information may include information such as a specific cinema, a quantity of tickets, and a date for a ticket. Therefore, after the ticket buying schedule is due, a recommendation service including a ticketing application may be displayed on a displayed reminder page. Because the schedule is associated with the ticket buying information, when buying a ticket by using the ticketing application, the user does not need to input the ticket buying information, so that ticket buying efficiency can be improved and user experience can be improved.

In some optional embodiments, for a chain schedule, target information of a schedule in one chain schedule may be determined based on information about another schedule in the chain schedule, thereby helping the user to perform a task in a coherent manner and improving task execution efficiency.

For example, it is assumed that there is a chain schedule of going to a concert in another city. The chain schedule may include two schedules, for example, a schedule 1 and a schedule 2. The schedule 1 may be a hotel booking schedule, and the schedule 2 may be a concert ticket booking schedule. It may be understood that, to facilitate a trip of the user, the user usually selects an address of a hotel near a concert venue. Therefore, address information in the schedule 1 may be determined based on address information in the schedule 2, so that efficiency of executing a task by the user can be improved. However, in the conventional technology, even if the user generates the hotel booking schedule and the concert ticket booking schedule, there is no recommendation service in the hotel booking schedule, and address information of the concert venue is not included in the hotel recommendation service. It can be learned that tasks in the conventional technology are not coherent or associated with each other. This greatly reduces efficiency of executing tasks by the user.

In some optional embodiments, a target application in the recommendation service may be determined based on habits and preferences of the user. In other words, the target application in the recommendation service may be an application most frequently used by the user or a favorite application of the user. The habits and preferences of the user may be obtained from the user personal knowledge base.

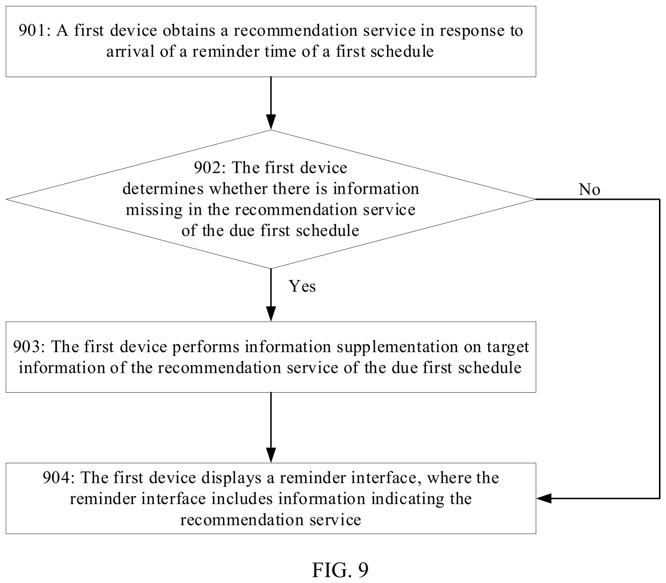

The foregoing describes examples of schedule generation with reference to FIG. 3, FIG. 4A, FIG. 4B, FIG. 5, FIG. 6A, FIG. 6B, FIG. 7, and FIG. 8. Next, the following describes examples of a schedule reminder with reference to FIG. 9 to FIG. 11.

FIG. 9 is a schematic flowchart of an embodiment of a schedule reminder method according to this application. After step 306, the method may further include the following steps.

Step 901: The first device obtains a recommendation service in response to arrival of a reminder time of a first schedule.

Specifically, each schedule may correspond to one target task, each target task may include one reminder time, and the reminder time may be a time at which the user is reminded to execute the target task.

After the first schedule is due, the first device may obtain a recommendation service of a target task corresponding to the due first schedule. The target task in the first schedule may be a task that needs to be completed by using a target application, and the target application is an application that executes the target task corresponding to the due first schedule. Therefore, the recommendation service may include a recommended target application.

For example, the first schedule is a ticket buying schedule, and a target task corresponding to the ticket buying schedule is a ticket buying task. Therefore, after the ticket buying schedule is due, the first device may obtain a corresponding recommendation service. For example, the recommendation service may be a ticketing application, so that the user can complete the ticket buying task by using the ticketing application.

In some optional embodiments, the target application may be determined based on a common habit of the user, or the target application may be determined based on an application frequently used by the user, or the target application may be determined based on a type of a current target task. This is not specifically limited in embodiments of this application.

It may be understood that the reminder time may be indicated by using content in a time information field of the target task.

For example, the target task is watching a movie. It is assumed that content of a time information field included in the target task of watching a movie is 18:00 on January 1, 2000. In this case, the reminder time may be 18:00 on January 1, 2000.

In some optional embodiments, the recommendation service may further include target information, where the target information is task information that needs to be input to complete, on the target page, the target task corresponding to the due first schedule.

In some optional embodiments, the target information may be obtained from the due first schedule.

It may be understood that the first schedule includes task-related information, and the target information required for executing the target task may be obtained by querying the task information in the first schedule.

In some optional embodiments, the task-related information included in the first schedule may not include the target information. In this case, the target information may be obtained from the user information of the first user.

Step 902: The first device determines whether there is information missing in the recommendation service of the due first schedule.

Specifically, after obtaining the recommendation service of the due first schedule, the first device may further determine whether there is information missing in the recommendation service of the due first schedule. The information missing in this step refers to whether there is information missing in the target information that is of the recommendation service and that is required for executing the target task in the schedule.

Buying a movie ticket is used as an example. A target task of buying a movie ticket may include a time information field and an event information field. Content indicated by the time information field may include a reminder time, that is, a reminder time for the user to buy a movie ticket. Content indicated by the event information field is used to remind the user to do something, for example, in this embodiment of this application, to remind the user to buy a movie ticket. Because the task is to buy a movie ticket in this embodiment, the application in the recommendation service may be a ticketing application. However, to successfully buy a ticket, information such as a quantity of tickets, a cinema, and a movie is needed. Because the information field of the target task does not include the information, information required for executing the target task of ticket buying is missing in the recommendation service. Therefore, the target information required for executing the target task of ticket buying may be supplemented.

If the first device determines that there is information missing in the target information of the recommendation service of the due first schedule, step 903 may be performed.

Alternatively, if the first device determines that there is no information missing in the target information of the recommendation service of the due first schedule, step 904 may be performed.

Step 903: The first device performs information supplementation on the target information of the recommendation service of the due first schedule.

Specifically, the first device may perform information supplementation on the target information of the recommendation service of the due first schedule in the following two manners:

Manner 1: The first device performs information supplementation based on information about another schedule in a chain schedule.

Because a plurality of schedules in the chain schedule are coherent and associated with each other, when there is information missing in a recommendation service of any due schedule, information about another schedule other than the due schedule in the chain schedule may be obtained, and information supplementation may be performed on information about the recommendation service of the due schedule based on the information about the another schedule. Therefore, if the first schedule is a schedule in the chain schedule, the first device may perform information supplementation on the target information of the recommendation service of the due first schedule based on information about another schedule other than the due first schedule in the chain schedule.

Manner 2: The first device performs information supplementation based on information in the user personal knowledge base.

Because the user personal knowledge base includes personal information such as user habits and preferences and user relationship information such as a social relationship, information supplementation may be performed on the target information of the recommendation service of the due first schedule through knowledge reasoning. Buying a movie ticket is still used as an example. A cinema that the user often goes to may be deduced by using the user personal knowledge base, and therefore, information about the cinema may be supplemented.

It may be understood that the foregoing two manners may be used separately or in combination based on an actual requirement. This is not specifically limited in embodiments of this application.

Step 904: The first device displays a reminder interface, where the reminder interface includes information indicating the recommendation service.

Specifically, the reminder interface may be in a form of a card, a notification, or another form. This is not specifically limited in embodiments of this application.

The reminder interface may include information indicating the recommendation service of the due first schedule. For example, the information about the recommendation service may include the target application and the target information. In this case, the user can tap the target application indicated by the recommendation service, to jump to the target page and automatically input the target information on the target page, so that the user completes, on the target page by using a one-tap operation, the target task corresponding to the due first schedule.

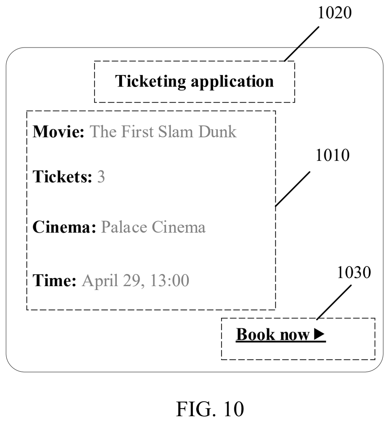

A card reminder is used as an example for description with reference to FIG. 10. With reference to FIG. 10, a card 1000 may include a first area 1010, a second area 1020, and a third area 1030. The first area 1010 includes schedule-related information of the user, the second area 1020 includes a target application, the third area 1030 may be a jump control, where the jump control may be configured to jump to a target page of the target application corresponding to the second area 1020. A ticket buying task is used as an example. The first area 1010 may include ticket buying schedule-related information, the second area 1020 may indicate a name of a ticketing application, and the jump control in the third area 1030 may be configured to jump to a target page of the ticketing application. It may be understood that the target page may be a page on which task information is automatically input, that is, the target page may not be a home page.

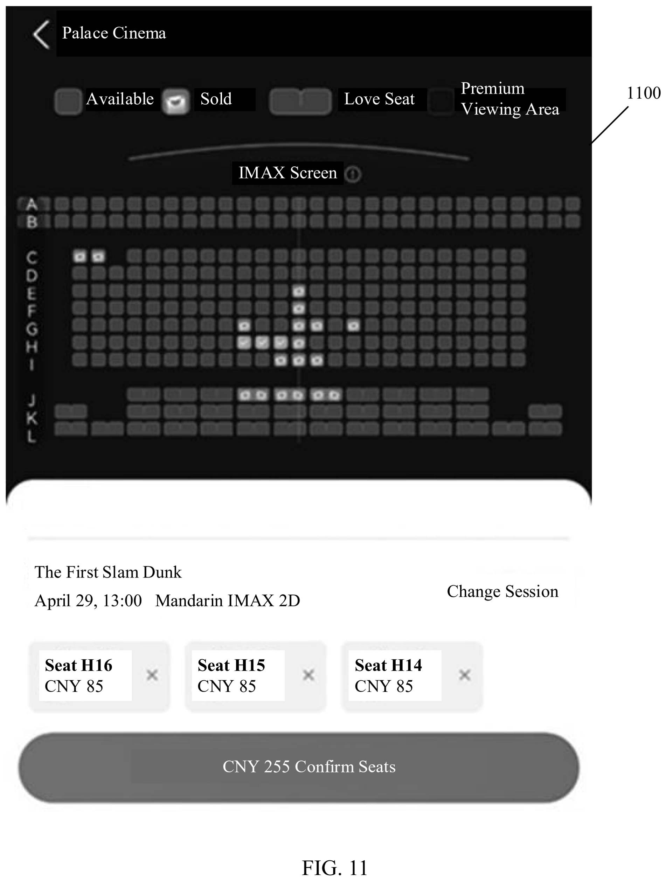

In some optional embodiments, the target information (information such as a quantity of tickets, a cinema, and a movie) may be indicated in the first area 1010. For example, the first area 1010 already includes the target information. Therefore, the user may tap the jump control to directly jump to a ticket buying page 1100 shown in FIG. 11, and automatically input, on the ticket buying page 1100, the target information indicated by the first area 1010, so that the user may directly buy a ticket after selecting a seat. This can implement one-tap ticket buying, without a need to enter the home page, and then input ticket buying information on the home page to access the ticket buying page for buying.

In some optional embodiments, the first area 1010 may include some target information, or the first area 1010 does not include the target information. In this case, the target information may be carried by the jump control. For example, the user may tap the jump control to directly jump to the ticket buying page 1100 shown in FIG. 11, and automatically input, on the ticket buying page 1100, the target information carried by the jump control, so that the user may directly buy a ticket after selecting a seat. This can implement one-tap ticket buying, without a need to enter the home page, and then input ticket buying information on the home page to access the ticket buying page for buying.

It can be learned that, in comparison with the conventional technology in which a schedule reminder does not include a next step recommendation, in this embodiment of this application, during a schedule reminder, a suggestion on a next step plan, a guiding suggestion, and a related service recommendation are provided, and a target page is directly entered to complete a task by obtaining target information required for executing the task, thereby greatly improving task execution efficiency, facilitating user operations, and improving user experience.

The following describes, by using specific embodiments, examples of schedule generation and schedule reminder that are provided in embodiments of this application.

It is assumed that there are three users: a user 1, a user 2, and a user 3. The user 1 uses an electronic device 1, the user 2 uses an electronic device 2, and the user 3 uses an electronic device 3. The user 1 is located in a place A, and the user 2 and the user 3 are located in a place B. The three users are chatting in a group, discussing plans to attend a concert at the place A. The user 1 has also offered to treat the user 2 and the user 3 to dinner.

For the user 1, the user 1 may copy content in a chat box in the electronic device 1. After the electronic device 1 identifies that the content in the chat box has an intention of generating a schedule, the electronic device 1 may further perform task decomposition on the content in the chat box, and may generate a corresponding chain schedule 1 from a perspective of the user 1. Information supplementation may be performed on a schedule with missing information in the chain schedule 1, and each schedule in the chain schedule 1 has a corresponding recommendation service. Based on a chain sequence of events, the chain schedule 1 may include three schedules: a concert ticket buying schedule, a concert attendance schedule, and a dinner schedule. Then, all schedules in the chain schedule 1 may be displayed in a calendar of the electronic device 1. When a date indicated in the concert ticket buying schedule is due, the electronic device 1 may remind the user 1 through a card. The card may include a recommended ticketing application and ticket buying information. The user may buy a ticket through a ticketing application entry on the card, to complete a ticket buying task. When a date indicated in the concert attendance schedule is due, the electronic device 1 may remind the user 1 through a card. The card may include a recommended ride-hailing application and ride-hailing information. The user may hail a ride through a ride-hailing application entry on the card, to complete a task of attending to the concert at a destination. When a date indicated in the dinner schedule is due, the electronic device 1 may remind the user 1 through a card. The card may include a recommended ride-hailing application and ride-hailing information. The user may hail a ride through a ride-hailing information entry in the movie, to complete a task of having a dinner at a destination. It may be understood that when a related task is executed by using a recommended application entry on the card, a home page of the application may not be entered, but a related page of the application may be directly entered to complete a related task.

Table 1 shows an example of schedules in the chain schedule 1.

**Table 1**

| Users | Schedules |
|---|---|
| User 1 | Buy a concert ticket |
| | Attend a concert |
| | Dinner |

For the user 2, the user 2 may copy content in a chat box in the electronic device 2. After the electronic device 2 identifies that the content in the chat box has an intention of generating a schedule, the electronic device 2 may further perform task decomposition on the content in the chat box, and may generate a corresponding chain schedule 2 from a perspective of the user 2. Information supplementation may be performed on a schedule with missing information in the chain schedule 2, and each schedule in the chain schedule 2 has a corresponding recommendation service. Based on a chain sequence of events, the chain schedule 2 may include five schedules: a concert ticket buying schedule, a train ticket buying schedule, a hotel booking schedule, a concert attendance schedule, and a dinner schedule. The concert ticket buying schedule, the concert attendance schedule, and the dinner schedule of the user 2 are the same as those of the user 1. Then, all schedules in the chain schedule 2 may be displayed in a calendar of the electronic device 2. When a date indicated in the concert ticket buying schedule, a date indicated in the concert attendance schedule, and a date indicated in the dinner schedule are separately due, the user 2 may be reminded. For a specific manner of reminding the user 2, refer to the manner of reminding the user 1 in the foregoing embodiment. Details are not described herein again. When a date indicated in the train ticket buying schedule is due, the electronic device 2 may remind the user 2 through a card. The card may include a recommended ticketing application and ticket buying information. The user may buy a ticket through a ticketing application entry on the card, to complete a train ticket buying task. After a date indicated in the hotel booking schedule is due, the electronic device 2 may remind the user 2 through a card. The card may include a recommended travel application and travel information. The user may book a hotel through a travel application entry on the card, to complete a hotel booking task.

Table 2 shows an example of schedules in the chain schedule 2.

**Table 2**

| User | Schedules |
|---|---|
| User 2 | Buy a concert ticket |
| | Buy a train ticket |
| | Book a hotel |
| | Attend a concert |
| | Dinner |

For the user 3, the user 3 may copy content in a chat box in the electronic device 3. After the electronic device 3 identifies that the content in the chat box has an intention of generating a schedule, the electronic device 3 may further perform task decomposition on the content in the chat box, and may generate a corresponding chain schedule 3 from a perspective of the user 3. Information supplementation may be performed on a schedule with missing information in the chain schedule 3, and each schedule in the chain schedule 3 has a corresponding recommendation service. Based on a chain sequence of events, schedules in the chain schedule 3 are the same as those in the chain schedule 2. For a specific reminder manner of the schedules in the chain schedule 3, refer to the reminder manner of the schedules in the chain schedule 2. Details are not described herein again.

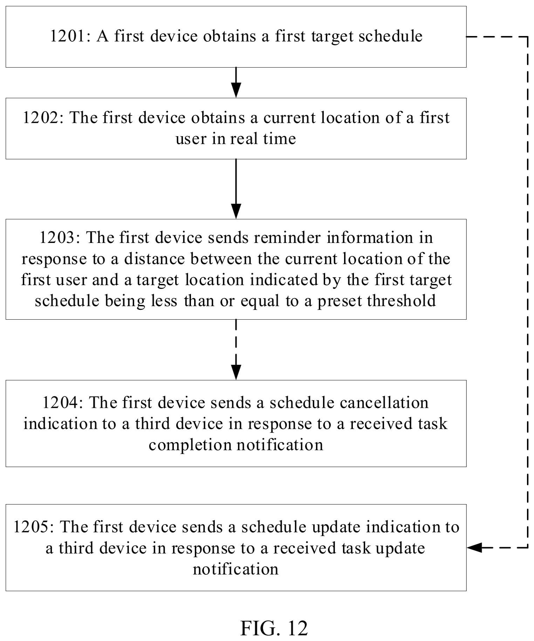

FIG. 12 is a schematic flowchart of another embodiment of a schedule reminder method according to this application. In the embodiment shown in FIG. 12, a plurality of users may share a same target task, and corresponding reminders may be performed based on trips or movement trajectory of different users. The method specifically includes the following steps.

Step 1201: The first device obtains a first target schedule.

Specifically, the first target schedule may be a schedule generated according to the method in the foregoing embodiment, or the first target schedule may be a schedule generated according to the conventional technology. This is not specifically limited in embodiments of this application.

In some optional embodiments, the first target schedule may be generated by the first device, a plurality of users may generate respective corresponding schedules by using respective electronic devices, and the plurality of different schedules may share a same target task.

For example, three users are used as an example. The three users may be a user 1, a user 2, and a user 3 respectively. The user 1 uses an electronic device 1, the user 2 uses an electronic device 2, and the user 3 uses an electronic device 3. The electronic device 1 may generate a schedule 1 based on an input text, the electronic device 2 may generate a schedule 2 based on the input text, and the electronic device 3 may generate a schedule 3 based on the input text.

It may be understood that the first device may be any one of the electronic device 1, the electronic device 2, and the electronic device 3.

It should be noted that the electronic device 1, the electronic device 2, and the electronic device 3 may be based on a same input text. Therefore, the schedule 1, the schedule 2, and the schedule 3 may correspond to a same target task and a same target location. For example, the target task may be a package pickup task or another task. This is not specifically limited in embodiments of this application. For example, the target task is a package pickup task, and the target location may be a package pickup address. The user 1, the user 2, and the user 3 may all have a same target task of picking up a package at a same location. In some embodiments, the target location may alternatively be an address of another type. This is not specifically limited in embodiments of this application.

In some optional embodiments, after generating a schedule, a second device may share a target task corresponding to the schedule to another device, and after receiving the target task shared by the second device, the first device may use the shared target task as a target task of the first target schedule. The second device may be any electronic device other than the first device in a plurality of electronic devices.

For example, the foregoing three users are still used as an example. If the first device is the electronic device 1, the second device may be the electronic device 2 or the electronic device 3. Alternatively, if the first device is the electronic device 2, the second device may be the electronic device 1 or the electronic device 3. Alternatively, if the first device is the electronic device 3, the second device may be the electronic device 1 or the electronic device 2.

It may be understood that a second user may be a user who uses the second device. When sharing the target task among the plurality of users, the second user may share the target task to not only a first user but also another user. For example, the foregoing three users are still used as an example. It is assumed that the first user is the user 1, and the second user is the user 2. In this case, the user 2 may share the target task to the user 1 and the user 3.

Step 1202: The first device obtains a current location of the first user in real time.

Specifically, the first user may be a user who uses the first device.

Although the schedule 1, the schedule 2, and the schedule 3 may correspond to a same target task and a same target location, the schedule 1, the schedule 2, and the schedule 3 correspond to different electronic devices, that is, the schedule 1, the schedule 2, and the schedule 3 are for different users. Therefore, a reminder time corresponding to the schedule 1, a reminder time corresponding to the schedule 2, and a reminder time corresponding to the schedule 3 may be different.

The first device may obtain the current location of the first user in real time, to obtain a reminder time corresponding to the first user.

The reminder time corresponding to the first user may be determined based on a distance between the current location of the first user and a target location in the schedule.

For example, the user 1, the user 2, and the user 3 are still used as an example. A reminder time corresponding to the schedule 1 of the user 1 may be t1, a reminder time corresponding to the schedule 2 of the user 2 may be t2, and a reminder time corresponding to the schedule 3 of the user 3 may be t3. t1 may be determined based on a distance between a current location of the user 1 and a target location in the schedule 1, t2 may be determined based on a distance between a current location of the user 2 and a target location in the schedule 2, and t3 may be determined based on a distance between a current location of the user 3 and a target location in the schedule 3.

Step 1203: The first device sends reminder information in response to a distance between the current location of the first user and a target location indicated by the first target schedule being less than or equal to a preset threshold.

Specifically, as the first user moves, the current location of the first user changes continuously, that is, the distance between the current location of the first user and the target location indicated by the first target schedule also changes continuously. Therefore, the first device may obtain the current location of the first user in real time, determine whether the distance between the current location of the first user and the target location indicated by the first target schedule is less than or equal to the preset threshold, and determine, based on a determining result, whether to send the reminder information.

The user 1, the user 2, and the user 3 are still used as an example. The first user may be any one of the user 1, the user 2, and the user 3, that is, from a perspective of different users, this user is the first user. For example, from a perspective of the user 1, the user 1 is the first user; or from a perspective of the user 2, the user 2 is the first user, and from a perspective of the user 3, the user 3 is the first user. The electronic device 1 may obtain the current location of the user 1, and may determine whether a distance between the current location of the user 1 and a target location indicated by the schedule 1 is less than or equal to the preset threshold. Alternatively, the electronic device 2 may obtain the current location of the user 2, and may determine whether a distance between the current location of the user 2 and a target location indicated by the schedule 2 is less than or equal to the preset threshold. Alternatively, the electronic device 3 may obtain the current location of the user 3, and may determine whether a distance between the current location of the user 3 and a target location indicated by the schedule 3 is less than or equal to the preset threshold.

If the electronic device 1 determines that the distance between the current location of the user 1 and the target location indicated by the schedule 1 is less than or equal to the preset threshold, the electronic device 1 may send the reminder information.

Alternatively, if the electronic device 2 determines that the distance between the current location of the user 2 and the target location indicated by the schedule 2 is less than or equal to the preset threshold, the electronic device 2 may send the reminder information.

Alternatively, if the electronic device 3 determines that the distance between the current location of the user 3 and the target location indicated by the schedule 3 is less than or equal to the preset threshold, the electronic device 3 may send the reminder information.

For a specific form of sending the reminder information by the first device, refer to related descriptions in the foregoing embodiment. Details are not described herein again.

In some optional embodiments, after step 1203, step 1204 may be further included.

Step 1204: The first device sends a schedule cancellation indication to a third device in response to a received task completion notification.

Specifically, after the first user completes the target task indicated by the first target schedule, a task platform may send the task completion notification to the first device.

The task completion notification is used to notify the first user that the target task indicated by the first target schedule is completed.

For example, the task platform is a shopping platform. After the first user performs shopping on the shopping platform, the shopping platform may send a package pickup notification message to the first device and the third device. The package pickup notification message may be the input text in step 1201. After the first user completes the pickup, the task platform may send a package pickup completion notification to the first device.

The third device is a device used by a third user. The third user and the first user are a user group that shares the target task.

For example, the three users in the foregoing embodiment are still used as an example. The user 1, the user 2, and the user 3 may share the target task. If the user 1 is the first user, the electronic device 1 is the first device, the user 2 and the user 3 are third users, and the electronic device 2 and the electronic device 3 are third devices. Alternatively, if the user 2 is the first user, the electronic device 2 is the first device, the user 1 and the user 3 are third users, and the electronic device 1 and the electronic device 3 are third devices. Alternatively, if the user 3 is the first user, the electronic device 3 is the first device, the user 1 and the user 2 are third users, and the electronic device 1 and the electronic device 2 are third devices.

In response to the received task completion notification, the first device may mark the first target schedule as completed or delete the first target schedule, and may send the schedule cancellation indication to the third device.

The schedule cancellation indication indicates the third device to cancel a second target schedule. The second schedule is a schedule obtained by the third device. A target task corresponding to the second target schedule and the target task corresponding to the first target schedule are a same task, that is, the second target schedule and the first target schedule share the target task.

In some optional embodiments, after determining that the first user completes the target task indicated by the first target schedule, the task platform may send task completion notifications to the first device and the third device. In this way, the first device and the third device may mark, based on the task completion notifications, respective corresponding target schedules as completed or delete the target schedules, thereby reducing message interaction between the first device and the third device, reducing overheads, and saving power consumption.

In some optional embodiments, after step 1201, step 1205 may be further included.

Step 1205: The first device sends a schedule update indication to a third device in response to a received task update notification.

Specifically, the first user may update, on a task platform, the target task indicated by the first target schedule.

Updating the target task indicated by the first target schedule may be changing a manner of executing the target task, updating the first target schedule may be changing a target location indicated by the first target schedule, or updating the first target schedule may be changing other information in the first target schedule. This is not specifically limited in embodiments of this application.

After determining that the target task indicated by the first target schedule is updated, the task platform may send the task update notification to the first device, where the task update notification is used to notify the first device that the target task indicated by the first target schedule is updated.

In response to the received task update notification, the first device may update the first target schedule based on the task update notification, and may send the schedule update indication to the third device.

The schedule update indication may indicate the third device to update a second target schedule.

In some optional embodiments, after determining that the target task indicated by the first target schedule is updated, the task platform may send task update notifications to the first device and the third device, where the task update notifications are used to notify the first device and the third device that target tasks indicated by the first target schedule and the second target schedule are updated, so that the first device and the third device may respectively update the first target schedule and the second target schedule based on the task update notifications.

Then, the following describes, by using specific embodiments, examples of schedule generation and schedule reminder that are provided in embodiments of this application.

It is assumed that there are three users: a user 1, a user 2, and a user 3. The user 1 uses an electronic device 1, the user 2 uses an electronic device 2, and the user 3 uses an electronic device 3. The user 1, the user 2, and the user 3 are members of a same family. The user 1, the user 2, and the user 3 may form a user group. In the user group, a target task may be shared when a schedule is created. For example, after the user 1 performs shopping in shopping software, the electronic device 1 may push the shopping notification to the user 2 and the user 3, or a shopping platform may push the shopping notification to the user 2 and the user 3. Then, when a package bought by the user 1 is transported to a storage locker, express delivery software may simultaneously send package pickup notifications to the electronic device 1, the electronic device 2, and the electronic device 3. The electronic device 1, the electronic device 2, and the electronic device 3 may respectively generate a corresponding schedule 1, a corresponding schedule 2, and a corresponding schedule 3 based on the package pickup notifications. The schedule 1, the schedule 2, and the schedule 3 correspond to a same package pickup task and a same package pickup address, and a package pickup reminder time corresponding to the schedule 1, a package pickup reminder time corresponding to the schedule 2, and a package pickup reminder time corresponding to the schedule 3 may be determined based on trips of the user 1, the user 2, and the user 3. If the user 1 first approaches the package pickup address, the electronic device 1 may first generate a reminder, to remind the user 1 to pick up the package; or if the user 2 first approaches the package pickup address, the electronic device 2 may first generate a reminder, to remind the user 2 to pick up the package; or if the user 3 first approaches the package pickup address, the electronic device 3 may first generate a reminder, to remind the user 3 to pick up the package. In other words, the package pickup reminder time is determined based on a distance between the user and the package pickup address. The package pickup reminder is sent to the user who is close to the package pickup address first.

It may be understood that, after any one of the user 1, the user 2, and the user 3 completes the pickup, the express delivery software may send a package pickup completion notification to a calendar application in the electronic device that completes the pickup. After the pickup is completed, the electronic device that completes the pickup may delete the schedule from the calendar application, and may send schedule cancellation indications to the other two electronic devices, so that the other two electronic devices may cancel corresponding schedules.

For example, it is assumed that the user 1 first completes the pickup. In this case, the express delivery software may send the package pickup completion notification to a calendar application in the electronic device 1, to notify the electronic device 1 that the pickup is completed. In this case, the schedule 1 in the electronic device 1 may be marked as completed, or the schedule 1 in the electronic device 1 is deleted, that is, the user 1 does not need to process the schedule 1. Then, the electronic device 1 may further send schedule cancellation indications to calendar applications in the electronic device 2 and the electronic device 3, to indicate the user 2 and the user 3 to no longer process the schedules in the electronic device 2 and the electronic device 3.

In some optional embodiments, after any one of the user 1, the user 2, and the user 3 completes the pickup, the express delivery software may send package pickup completion notifications to calendar applications in the electronic device 1, the electronic device 2, and the electronic device 3, so that the electronic device 1, the electronic device 2, and the electronic device 3 may delete the schedule 1, the schedule 2, and the schedule 3 respectively based on the package pickup completion notifications.

In some optional embodiments, any one of the user 1, the user 2, and the user 3 may also update the package pickup information. After determining that package pickup information in the electronic device 1 is updated, the express delivery software may send a package pickup information update notification to the calendar application in the electronic device 1 based on updated package pickup information, so that the electronic device 1 may update the schedule 1 based on the package pickup information update notification, and the electronic device 1 may send schedule update indications to the electronic device 2 and the electronic device 3, to indicate the electronic device 2 and the electronic device 3 to update corresponding schedules.

For example, it is assumed that the user 1 changes delivery from package locker to doorstep delivery. In this case, the electronic device 1 may update a package pickup manner of the generated schedule 1, and may send schedule update indications to the electronic device 2 and the electronic device 3, to respectively indicate the electronic device 2 and the electronic device 3 to update package pickup manners of the generated schedule 2 and the generated schedule 3. Alternatively, it is assumed that the user 1 changes delivery from doorstep delivery to package locker. In this case, the electronic device 1 may update a package pickup manner of the schedule 1, and may send schedule update indications to the electronic device 2 and the electronic device 3, to respectively indicate the electronic device 2 and the electronic device 3 to update corresponding package pickup manners of the schedule 2 and the schedule 3.

In some optional embodiments, after determining that package pickup information in the electronic device 1 is updated, the express delivery software may send package pickup information update notifications to calendar applications in the electronic device 1, the electronic device 2, and the electronic device 3 based on updated package pickup information, so that the electronic device 1, the electronic device 2, and the electronic device 3 may respectively update the schedule 1, the schedule 2, and the schedule 3 based on the package pickup information update notifications.

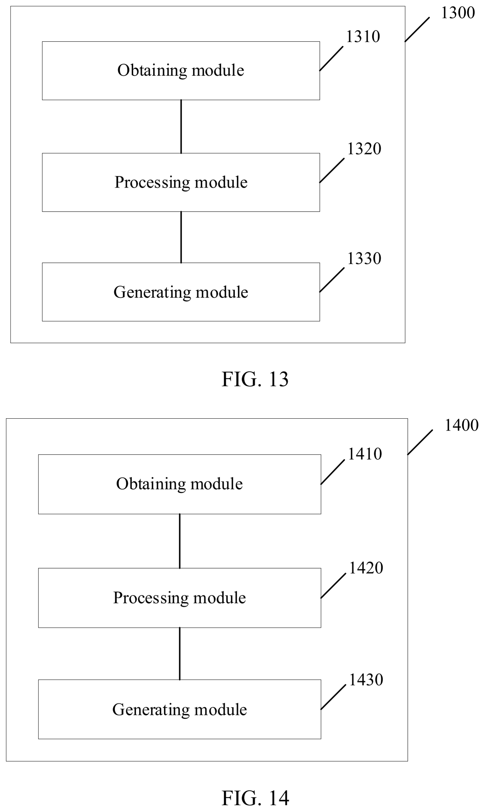

FIG. 13 is a diagram of a structure of an embodiment of a schedule generation apparatus according to this application. As shown in FIG. 13, the schedule generation apparatus 1300 is used in a first device, and the schedule generation apparatus 1300 may include an obtaining module 1310, a processing module 1320, and a generating module 1330.

The obtaining module 1310 is configured to obtain an input text.

The processing module 1320 is configured to process the input text based on user information of a first user to obtain a target task set, where the first user is a user who uses the first device, and the target task set includes one or more target tasks corresponding to the first user.

The generating module 1330 is configured to generate a corresponding schedule based on the target task set.

In a possible implementation, the processing module 1320 is specifically configured to decompose the input text to obtain an initial task set, where the initial task set includes one or more initial tasks; and
perform information supplementation and/or screening on the initial task set based on the user information of the first user, to obtain the target task set.

In a possible implementation, the processing module 1320 is specifically configured to perform, based on information found in the user information of the first user and/or information obtained through reasoning that is based on the user information of the first user, information supplementation on an initial task with missing information in the initial task set.

**In** a possible implementation, the processing module 1320 is specifically configured to screen out a completed task and/or a task unrelated to the first user from the initial task set.

In a possible implementation, the target task set includes a plurality of target tasks, the schedule generated based on the target task set is a chain schedule, a plurality of schedules in the chain schedule are generated based on the plurality of target tasks in the target task set, the plurality of schedules in the chain schedule are arranged in chronological order of execution, and the plurality of schedules in the chain schedule are associated with each other.

In a possible implementation, the schedule generation apparatus 1300 further includes:
a determining module, configured to: determine whether the input text includes an intention of generating a schedule; and
if the input text includes an intention of generating a schedule, process the input text based on the user information of the first user.

In a possible implementation, the user information of the first user includes personal information of the first user and/or social relationship information of the first user.

In a possible implementation, the personal information of the first user includes at least address location information of the first user, historical behavior information of the first user, and/or historical schedule information of the first user.

In a possible implementation, the schedule generation apparatus 1300 further includes:
a display module, configured to display a reminder interface in response to arrival of a reminder time of a first schedule, where the reminder interface is used to remind the user to execute a target task corresponding to a due schedule, the reminder interface includes information indicating a recommendation service of the due first schedule, the information about the recommendation service of the due first schedule includes a target application, and the target application is an application for executing the target task corresponding to the due first schedule; and
a jumping module, configured to jump to a target page in response to an operation of starting, by the user, the target application on the reminder interface, where the target page is a page displayed when the user completes the target task corresponding to the due first schedule.

In a possible implementation, the processing module 1320 is further configured to automatically input, on the target page, target information corresponding to the recommendation service of the due first schedule, where the target information is task information that needs to be input to complete, on the target page, the target task corresponding to the due first schedule.

In a possible implementation, the processing module 1320 is further configured to: determine whether there is information missing in the target information corresponding to the recommendation service of the due first schedule; and
if determining that there is information missing in the target information corresponding to the recommendation service of the due first schedule, perform information supplementation on the target information corresponding to the recommendation service of the due first schedule.

In a possible implementation, the processing module 1320 is specifically configured to: if the due first schedule is a schedule in the chain schedule, perform, based on information about another schedule other than the due first schedule in the chain schedule, information supplementation on the target information corresponding to the recommendation service of the due first schedule, where
the plurality of schedules in the chain schedule are generated based on the plurality of target tasks, the plurality of schedules in the chain schedule are arranged in chronological order of execution, and the plurality of schedules in the chain schedule are associated with each other.

In a possible implementation, the schedule generation apparatus 1300 further includes:
a reminding module, configured to: obtain a first target schedule; and
send, by using the first device, reminder information in response to a distance between a current location of the first user and a target location indicated by the first target schedule being less than or equal to a preset threshold, where the reminder information is used to remind the user to complete a task corresponding to the first target schedule.

In a possible implementation, the schedule generation apparatus 1300 further includes:
a sending module, configured to send a schedule cancellation indication to a third device in response to a received task completion notification, where
the task indicated by the first target schedule and a task indicated by a second target schedule are a same task, the second target schedule is a schedule in the third device, the task completion notification is used to notify that the task indicated by the first target schedule is completed, and the schedule cancellation indication indicates the third device to cancel the second target schedule.

The schedule generation apparatus 1300 provided in the embodiment shown in FIG. 13 may be configured to perform the technical solutions in the method embodiments in this application. For an implementation principle and technical effect of the schedule generation apparatus, refer to related descriptions in the method embodiments.

FIG. 14 is a diagram of a structure of another embodiment of a schedule generation apparatus according to this application. As shown in FIG. 14, the schedule generation apparatus 1400 may include an obtaining module 1410, a processing module 1420, and a generating module 1430.

The obtaining module 1410 is configured to obtain an input text.

The processing module 1420 is configured to process the input text to obtain a target task set, where the target task set includes a plurality of target tasks.

The generating module 1430 is configured to generate a chain schedule based on the target task set, where a plurality of schedules in the chain schedule are arranged in chronological order of execution, and the plurality of schedules in the chain schedule are associated with each other.

The schedule generation apparatus 1400 provided in the embodiment shown in FIG. 14 may be configured to perform the technical solutions in the method embodiments in this application. For an implementation principle and technical effect of the schedule generation apparatus, refer to related descriptions in the method embodiments.

It should be understood that division into the modules of the schedule generation apparatus 1300 shown in FIG. 13 and the schedule generation apparatus 1400 shown in FIG. 14 is merely logical function division. During actual implementation, some or a part of the modules may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, a detection module may be an independently disposed processing element, or may be integrated in one chip of an electronic device for implementation. An implementation of another module is similar to the implementation of the detection module. In addition, a part or all of these modules may be integrated together, or may be implemented independently. In an implementation process, steps in the foregoing methods or the foregoing modules can be implemented by using a hardware integrated logic circuit in the processor element, or by using instructions in a form of software.

For example, the foregoing modules may be one or more integrated circuits configured to implement the foregoing method, for example, one or more application-specific integrated circuits (Application-Specific Integrated Circuits, referred to as ASICs for short below), one or more microprocessors (Digital Signal Processors, referred to as DSPs for short below), or one or more field programmable gate arrays (Field Programmable Gate Arrays, referred to as FPGAs for short below). For another example, these modules may be integrated together and implemented in a form of a system-on-a-chip (System-on-a-Chip, referred to as SOC for short below).

In the foregoing embodiments, related processors may include, for example, a CPU, a DSP, a microcontroller, or a digital signal processor, and may further include a GPU, an embedded neural-network processing unit (Neural-network Processing Units, referred to NPU for short below), and an image signal processor (Image Signal Processor, referred to ISP for short below). The processors may further include a necessary hardware accelerator or logic processing hardware circuit, for example, an ASIC, or one or more integrated circuits configured to control program execution of the technical solutions of this application. In addition, the processors may have a function of operating one or more software programs, and the software programs may be stored in a storage medium.

An embodiment of this application further provides a readable storage medium. The readable storage medium stores a program. When the program is run on an electronic device, the electronic device is caused to perform the method provided in the embodiments of this application.

An embodiment of this application further provides a program product. The program product includes a program. When the program product runs on an electronic device, the electronic device is caused to perform the method provided in the embodiments of this application.

In embodiments of this application, "at least one" means one or more, and "a plurality of" means two or more. "And/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and similar expressions mean any combination of these items, including a single item or any combination of plural items. For example, at least one of a, b, or c may indicate a, b, c, a and b, a and c, b and c, or a, b, and c, where a, b, and c may be singular or plural.

A person of ordinary skill in the art may be aware that the units and algorithm steps described in the embodiments disclosed in this specification can be implemented by a combination of electronic hardware, computer software, and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, when any of the functions are implemented in a form of a software functional unit and sold or used as an independent product, the functions may be stored in a readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (Read-Only Memory, referred to as ROM for short below), a random access memory (Random Access Memory, referred to as RAM for short below), a magnetic disk, or an optical disc.

The foregoing descriptions are merely specific implementations of this application. Any variation or replacement readily figured out by a person skilled in the art within the technical scope disclosed in this application shall fall within the protection scope in this application. Therefore, the protection scope of this application shall be subject to the protection scope of the claims.

## Claims

1. A schedule generation method, applied to a first device, wherein the method comprises:
obtaining an input text;
processing the input text based on user information of a first user to obtain a target task set, wherein the first user is a user who uses the first device, and the target task set comprises one or more target tasks corresponding to the first user; and
generating a corresponding schedule based on the target task set.

2. The method according to claim 1, wherein processing the input text based on the user information of the first user to obtain the target task set comprises:
decomposing the input text to obtain an initial task set, wherein the initial task set comprises one or more initial tasks; and
performing information supplementation and/or screening on the initial task set based on the user information of the first user, to obtain the target task set.

3. The method according to claim 2, wherein performing information supplementation and/or screening on the initial task set based on the user information of the first user comprises:
performing, based on information found in the user information of the first user and/or information obtained through reasoning that is based on the user information of the first user, information supplementation on an initial task with missing information in the initial task set.

4. The method according to claim 2, wherein performing information supplementation and/or screening on the initial task set based on the user information of the first user comprises:
screening out a completed task and/or a task unrelated to the first user from the initial task set.

5. The method according to any one of claims 1 to 4, wherein the target task set comprises a plurality of target tasks, the schedule generated based on the target task set is a chain schedule, a plurality of schedules in the chain schedule are generated based on the plurality of target tasks in the target task set, the plurality of schedules in the chain schedule are arranged in chronological order of execution, and the plurality of schedules in the chain schedule are associated with each other.

6. The method according to any one of claims 1 to 5, wherein before processing the input text based on the user information of the first user, the method further comprises:
determining whether the input text comprises an intention of generating a schedule; and
if the input text comprises an intention of generating a schedule, processing the input text based on the user information of the first user.

7. The method according to any one of claims 1 to 6, wherein the user information of the first user comprises personal information of the first user and/or social relationship information of the first user.

8. The method according to claim 7, wherein the personal information of the first user comprises at least address location information of the first user, historical behavior information of the first user, and/or historical schedule information of the first user.

9. The method according to any one of claims 1 to 8, wherein after generating the corresponding schedule based on the target task set, the method further comprises:
displaying a reminder interface in response to arrival of a reminder time of a first schedule, wherein the reminder interface is used to remind the user to execute a target task corresponding to a due schedule, the reminder interface comprises information indicating a recommendation service of the due first schedule, the information about the recommendation service of the due first schedule comprises a target application, and the target application is an application for executing the target task corresponding to the due first schedule; and
jumping to a target page in response to an operation of starting, by the user, the target application on the reminder interface, wherein the target page is a page displayed when the user completes the target task corresponding to the due first schedule.

10. The method according to claim 9, wherein after jumping to the target page, the method further comprises:
automatically inputting, on the target page, target information corresponding to the recommendation service of the due first schedule, wherein the target information is task information that needs to be input to complete, on the target page, the target task corresponding to the due first schedule.

11. The method according to claim 9, wherein before automatically inputting, on the target page, the target information corresponding to the recommendation service of the due first schedule, the method further comprises:
determining whether there is information missing in the target information corresponding to the recommendation service of the due first schedule; and
if determining that there is information missing in the target information corresponding to the recommendation service of the due first schedule, performing information supplementation on the target information corresponding to the recommendation service of the due first schedule.

12. The method according to claim 11, wherein performing information supplementation on the target information corresponding to the recommendation service of the due first schedule comprises:
if the due first schedule is a schedule in the chain schedule, performing, based on information about another schedule other than the due first schedule in the chain schedule, information supplementation on the target information corresponding to the recommendation service of the due first schedule, wherein
the plurality of schedules in the chain schedule are generated based on the plurality of target tasks, the plurality of schedules in the chain schedule are arranged in chronological order of execution, and the plurality of schedules in the chain schedule are associated with each other.

13. The method according to any one of claims 1 to 8, wherein after generating the corresponding schedule based on the target task set, the method further comprises:
obtaining a first target schedule; and
sending, by the first device, reminder information in response to a distance between a current location of the first user and a target location indicated by the first target schedule being less than or equal to a preset threshold, wherein the reminder information is used to remind the user to complete a task corresponding to the first target schedule.

14. The method according to claim 13, wherein after sending, by the first device, the reminder information, the method further comprises:
sending a schedule cancellation indication to a third device in response to a received task completion notification, wherein
the task indicated by the first target schedule and a task indicated by a second target schedule are a same task, the second target schedule is a schedule in the third device, the task completion notification is used to notify that the task indicated by the first target schedule is completed, and the schedule cancellation indication indicates the third device to cancel the second target schedule.

15. A schedule generation method, wherein the method comprises:
obtaining an input text;
processing the input text to obtain a target task set, wherein the target task set comprises a plurality of target tasks; and
generating a chain schedule based on the target task set, wherein a plurality of schedules in the chain schedule are arranged in chronological order of execution, and the plurality of schedules in the chain schedule are associated with each other.

16. An electronic device, comprising a processor and a memory, wherein the memory is configured to store a program; and the processor is configured to run the program to implement the schedule generation method according to any one of claims 1 to 14; or implement the schedule generation method according to claim 15.

17. A readable storage medium, wherein the readable storage medium stores a program, and when the program is run on an electronic device, the schedule generation method according to any one of claims 1 to 16 is implemented.
